# FASCICULE DE BREVET EUROPEEN

(11) **EP 0 415 827 B1**
(45) Date de publication et mention de la délivrance du brevet: **11.05.1994**
(21) Numéro de dépôt: 90402346.2
(22) Date de dépôt: 23.08.1990
(51) Int. Cl.: C03B 23/03, C03B 23/025, C03B 23/023

(54) **Dispositif de bombage de feuilles de verre**
Vorrichtung zum Biegen von Glasscheiben
Apparatus for bending glass-sheets

(30) Priorité: 01.09.1989 DE 3929042
(43) Date de publication de la demande: 06.03.1991
(73) Titulaire: SAINT GOBAIN VITRAGE INTERNATIONAL, 92400 Courbevoie (FR); VEGLA Vereinigte Glaswerke GmbH, D-52066 Aachen (DE)
(72) Inventeur: D'Iribarne, Benoit, Laidon, Pasildon, Essex SS 15 6 EE (GB); VanAschen, Luc, B-4700 Eupen (BE); Promper, Hans-Josef, D-5100 Aachen (DE); Kuster, Hans-Werner, D-5100 Aachen (DE)
(74) Mandataire: Menes, Catherine

(56) Documents cités:
- EP-A- 0 003 391
- EP-A- 0 298 426
- WO-A-88/09309
- GB-A- 2 011 377
- US-A- 4 778 507

## Description

L'invention concerne un dispositif de bombage de feuilles de verre. Plus précisément l'invention concerne un perfectionnement aux techniques de bombage dans lesquelles des feuilles de verre sont chauffées en position horizontale dans un four traversant et sont transférées sur un cadre annulaire coopérant avec une forme supérieure de bombage.

De très nombreuses variantes de réalisation de tels dispositifs de bombage sont connues de l'art. Selon EP-A-183 418, la feuille de verre - réchauffée à température de bombage dans un four à rouleaux - est conduite à un poste de transfert où elle est prise en charge par une plaque aspirante qui la soulève au-dessus des rouleaux et la dépose ensuite sur un cadre annulaire unique qui conduit la feuille de verre sous une forme supérieure de bombage pleine au moyen de laquelle s'effectue le bombage par pressage.

Dans une autre variante connue de EP-A-62 814, la dernière section du convoyeur menant les feuilles de verre au poste de bombage est abaissée de sorte que la feuille de verre est ainsi déposée sur un cadre annulaire. Une forme de bombage supérieure est alors descendue pour réaliser le pressage. La feuille de verre bombée est ensuite évacuée hors du poste de bombage par le cadre annulaire tandis qu'un second cadre annulaire vient prendre en charge la feuille suivante.

On connait également des installations dans lesquelles les feuilles de verre sont chargées dès l'entrée du four sur des cadres annulaires venant s'immobiliser dans le poste de bombage sous une forme supérieure de bombage au moyen de laquelle s'effectue le pressage conférant à la feuille de verre sa forme définitive.

Pour l'ensemble de ces installations, il est relativement difficile de positionner le cadre annulaire exactement sous la forme supérieure de bombage. Or si ce positionnement fait défaut, la pression exercée sur la zone marginale de la feuille de verre n'est pas constante ce qui peut entraîner des défauts optiques ou de galbe dus aux empreintes laissées sur le verre au niveau des zones plus comprimées.

Il est certes connu de EP-A-237 231 d'équiper le cadre annulaire de butées réglables qui limitent la descente de la forme supérieure de bombage et évitent ainsi le marquage du verre. Toutefois la force de pression est alors transmise entièrement à ces butées, ce qui accroît le risque d'une déformation du cadre annulaire. En outre ce mode de réalisation ne permet pas d'assurer l'exercice d'une force de pression constante sur la zone marginale de la feuille de verre car logiquement les butées doivent être réglées sur un écart supérieur à celui correspondant à l'épaisseur des feuilles de verre.

Par ailleurs, il est connu du brevet US-4 778 507 une technique de bombage de deux feuilles de verre simultanément. Cette technique consiste à déposer les deux feuilles de verre superposées sur un moule annulaire inférieur, celles-ci se courbant alors sous l'action de la chaleur et de leur propre poids, puis à compléter ce bombage par une étape de pressage entre ce moule inférieur et une forme supérieure pleine, pressage n'affectant pas la périphérie des feuilles de verre. Sont en outre prévus des moyens d'indexage entre formes inférieure et supérieure, de manière à rectifier toute déviation dans le positionnement de la forme supérieure, horizontalement.

L'invention a pour but d'améliorer les dispositifs de bombage du type indiqué ci-dessus de manière à obtenir une plus grande constance dans la force de compression exercée sur la zone marginale de la feuille de verre, sans risquer un marquage de celle-ci.

Il est proposé dans ce but, un dispositif pour le bombage par pressage de feuilles de verre en position horizontale comprenant au moins une forme de bombage inférieure déplacée horizontalement dans le sens de transport des feuilles de verre et une forme de bombage supérieure disposée au-dessus du plan de transport des feuilles de verre, fixée à des barres verticales permettant sa montée et sa descente et dont la force de pressage est définie par son propre poids, ladite forme de bombage supérieure étant, selon l'invention, fixée auxdites barres de façon réglable en hauteur et angulairement, rendant ainsi la force de pressage indépendante de la position en hauteur de la forme de bombage inférieure.

Les barres assurent donc le guidage vertical de la forme supérieure de bombage tandis que pour sa part, un positionnement angulaire souple est obtenu par une fixation idoine aux barres de la forme supérieure de bombage. La force de pressage est ainsi indépendante de la position en hauteur de la forme inférieure ou en d'autres termes du cadre annulaire. Tout écart de positionnement, même faible, de la forme inférieure est ainsi compensé par la suspension souple de la forme supérieure qui exerce dès lors une force de pressage identique en tout point de la zone marginale de la feuille de verre.

Dans une variante avantageuse de l'invention, chaque barre de suspension est munie d'un dispositif de délestage apte à exercer sur la barre de suspension une force s'opposant à celle du poids de la forme supérieure de bombage, ce poids déterminant la valeur maximale de la force de compression susceptible d'être exercée par le dispositif. On peut ainsi adapter la force de pressage optimalement en fonction de la taille ou de la forme souhaitée de à la feuille de verre. Ce dispositif de délestage peut être de manière particulièrement avantageuse composé d'un vérin hydraulique ou pneumatique avec une présélection de la pression du fluide de pression. Par un réglage approprié de la pression dans le vérin on peut modifier dans une large mesure l'intensité de la force de pressage qui peut être ainsi optimisée quelles que soient la taille des feuilles de verre et la forme recherchée. Selon un mode de réalisation selon l'invention, les barres peuvent ainsi être suspendues par des cables ou chaînes à un cadre pouvant être abaissé ou remonté et sur lequel sont disposés des appareillages. Ceux-ci exercent alors sur les barres par l'intermédiaire d'un cable tracteur une force s'opposant à celle du poids de la forme de bombage.

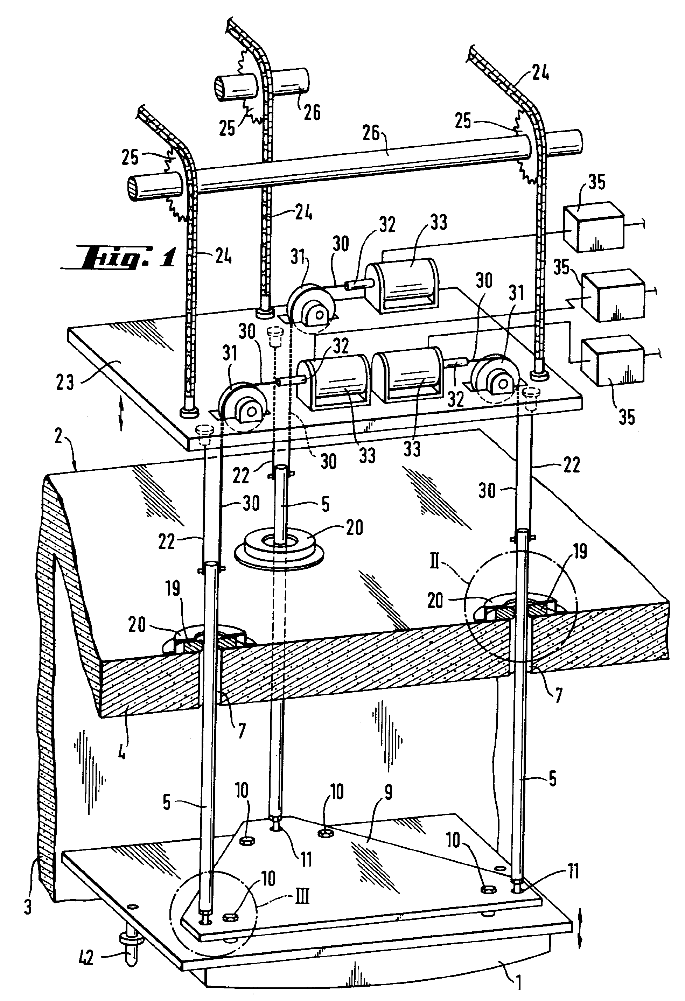

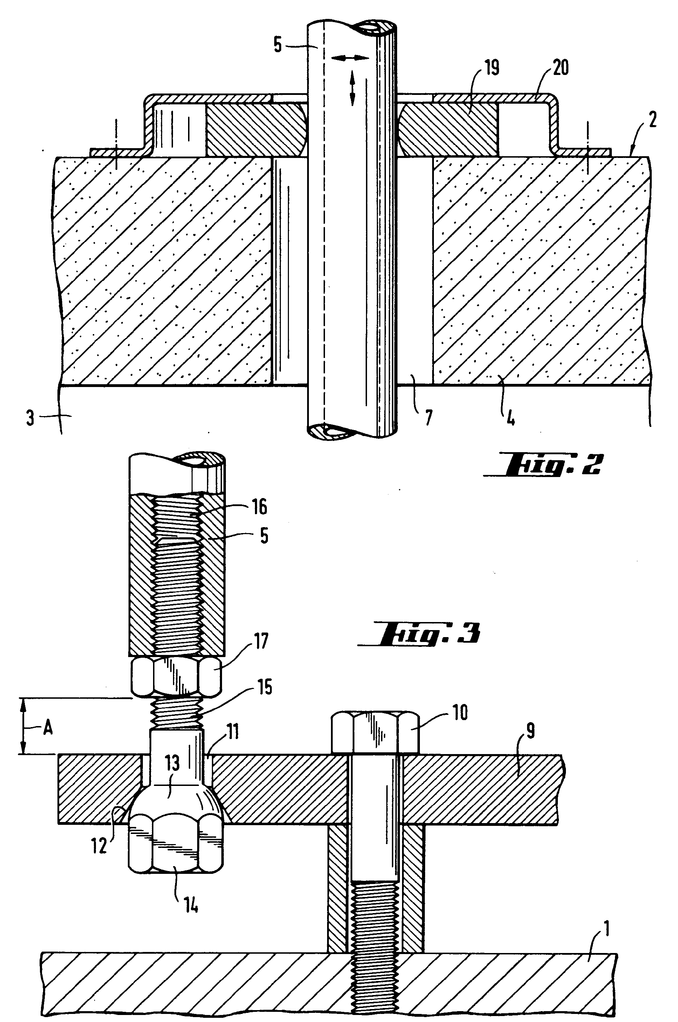

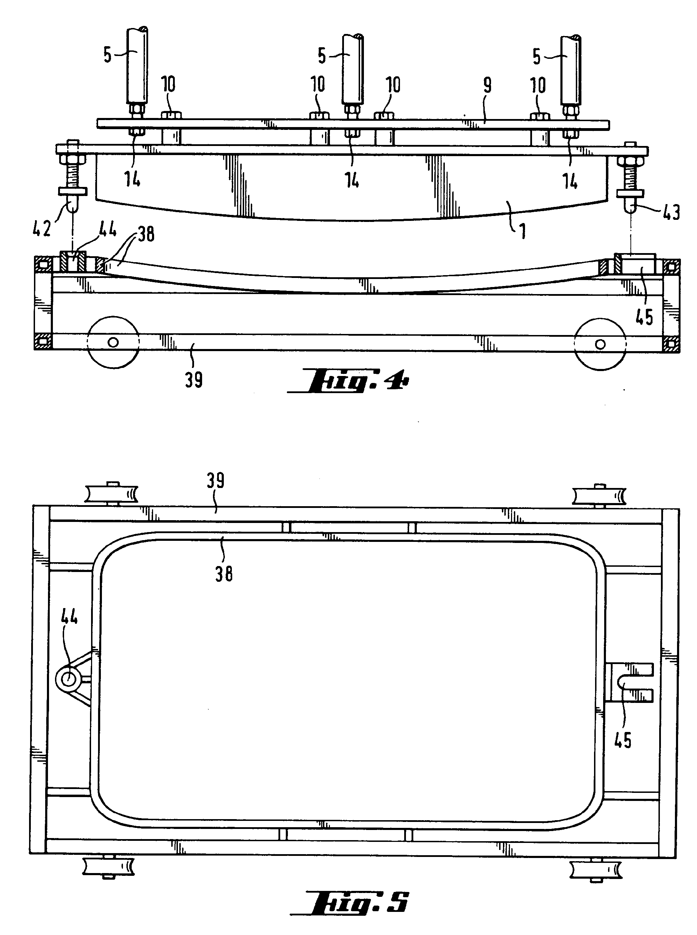

D'autres détails et caractéristiques avantageuses de l'invention ressortent de la description d'un exemple préféré de réalisation de l'invention, faite ci-après en référence aux dessins annexés qui représentent :
. **figure 1** : une vue en perspective d'une forme supérieure de bombage et de ses suspensions,
. **figure 2** : une vue à plus grande échelle du détail II de la figure 1,
. **figure 3** : une vue à plus grande échelle du détail III de la figure 1,
. **figure 4** : une coupe verticale d'une forme supérieure de bombage associée à une forme inférieure de bombage,
; **figure 5** : une vue de dessus de la forme inférieure de bombage de la figure 4.

Pour plus de clarté, on n'a représenté à la figure 1 que la forme supérieure de bombage d'un poste de bombage, munie de sa suspension et de ses éléments d'entraînement. La forme supérieure 1 est disposée dans un four, selon une position déterminée réglable en hauteur. Elle coopère pour le pressage d'une feuille de verre avec une forme inférieure de bombage du type cadre annulaire ouvert en son centre, non représentée sur cette figure 1.

Dans l'exemple de réalisation ici choisi, la station de bombage est disposée à l'intérieur du four 2 fermé sur le côté par des parois 3 et sur le dessus par un toit 4. Les outils de bombage à proprement dit, c'est-à-dire la forme 1 et ses barres de fixation 5, sont dans un environnement dont la température avoisine la température de bombage des feuilles de verre de l'ordre de 650 C. Il faut donc prévoir notamment pour les supports fixant la forme 1 aux barres 5 une construction robuste rendant possible des mouvements relatifs sans frottement.

Les barres 5 permettant les mouvements de montée-baisse de la forme 1 traversent le toit 4 par des perçages 7 dont le diamètre est nettement plus grand que celui des barres 5 de façon à autoriser un déplacement latéral et/ou une inclinaison des barres 5.

La forme supérieure de bombage 1 est pour sa part munie sur sa face de dessus d'une platine 9 fixée à une certaine distance de cette face de dessus et liée à la forme 1 par exemple par des vis 10.

Le montage de la platine 9 aux barres 5 est montré de façon détaillée figure 3. La platine 9 reçoit aux endroits appropriés des perçages 11 de forme frusto-conique, la partie conique 12 étant disposée sur la face inférieure de la platine 9, ce qui élargit cette partie 12 contre laquelle vient en appui le segment sphérique 13 d'une tête de vis 14. La partie élargie 12 des perçages 11 peut également être de forme cylindrique. La tête de vis 14 - et la surface du segment sphérique 13 - sont montées à l'extrémité d'une tige filetée 15 vissée dans un taraudage 16 situé à l'extrémité inférieure de la barre 5 et sécurisée par un contre-écrou 17.

Le perçage 11 dans la platine 9 a un diamètre supérieur à celui de la tige filetée 15, ce qui permet des mouvements relatifs de basculement angulaire. En outre, un écart A est prévu entre la face supérieure de la platine 9 et le contre-écrou 17 qui permet un déplacement vertical relatif.

Comme on peut le voir plus précisément sur la figure 2, le passage annulaire formé entre la barre 5 et la paroi du perçage 7 est fermé de façon étanche par une rondelle 19 simplement posée sur le toit 4 du four. Cette rondelle 19 permet d'éviter des déperditions thermiques et un échauffement excessif du mécanisme de suspension disposé au-dessus du four 2. La rondelle 19 est maintenue en place par un anneau de blocage 20 suffisamment large pour le déplacement par glissement de la rondelle 19.

De retour sur la figure 1, on note qu'au-dessus du four 2 les barres 5 sont fixées à un cadre 23 par des câbles ou chaînes 22. De son côté, le cadre 23 est suspendu aux câbles ou chaînes 24 arrivant horizontalement et engrenant sur des roues dentées 25 disposées sur un ou plusieurs arbres 26 et mises en rotation par un moteur d'entraînement ici non représenté, leur rotation dans un sens ou l'autre assurant la montée ou la baisse de la forme supérieure 1. Pour le bombage d'une feuille de verre, le cadre 23 est donc abaissé ; les barres 5 et forme supérieure 1 descendent sous l'effet de leur propre poids en direction du cadre annulaire constituant la forme inférieure et positionné juste sous la forme supérieure 1. Dès que la forme supérieure 1 se pose sur le cadre annulaire en un point supposant un serrage de la feuille de verre, elle est laissée en place à cette hauteur et le câble 22 correspondant est délesté. Le cadre 23 est abaissé tant que tous les câbles 22 ne sont pas entièrement délestés et que la forme supérieure de bombage 1 n'est pas posée par son propre poids et le poids des barres 5 sur la feuille de verre et ainsi sur le cadre annulaire.

Pour réduire la force de pressage dont l'intensité maximale est déterminée par le poids de la forme supérieure de bombage 1, on prévoit avantageusement des appareillages mis en place sur le cadre 23 et exerçant sur les différentes barres 5 des forces d'intensité réglables, opposées au poids de la forme de bombage. Dans ce but, on fixe à l'extrémité de chacune des barres 5 un câble ou une chaîne 30 passant par une poulie 31 fixée sur le cadre 23. Le câble 30 est attaché à la tige de piston 32 d'un vérin pneumatique ou hydraulique 33. Du côté du piston tourné vers le câble 30, le vérin 33 est alimenté par un fluide de pression dont la pression peut être ajustée et reste indépendante de la course du piston dans le vérin 33. De cette manière on peut compenser une très grande part du poids de la forme de bombage 1, ce qui permet un réglage fin de la force de pressage exercée. L'ajustement de la pression du fluide peut être effectué au moyen d'un régulateur de pression 35, qui d'une part permet le réglage de la pression souhaitée, et qui d'autre part comporte un dispositif de réglage assurant la conservation de la pression présélectionnée indépendamment du mouvement du piston dans le vérin 33.

Chacune des barres 5, ici au nombre de 3, est pourvue de son propre câble de délestage 30, de son vérin 33 et de son régulateur de pression, la pression sélectionnée pouvant le cas échéant varier d'une barre 5 à l'autre.

Les figures 4 et 5 illustrent la réalisation de la forme de bombage inférieure 38 posée sur un chariot mobile 39. La forme de bombage supérieure porte deux boulons de centrage 42, 43 qui concourent avec des trous de centrage correspondant prévus sur le cadre annulaire ou forme inférieure 38. Le trou de centrage 45 est un trou oblong orienté vers un trou de centrage 44 réalisé sous forme d'un oeil rond, en vue de compenser des changements éventuels de longueur intervenant à la suite de dilatations thermiques. On obtient ainsi un bon positionnement réciproque des deux formes de la presse de bombage.

## Revendications

1. Dispositif pour le bombage par pressage de feuilles de verre en position horizontale comprenant au moins une forme de bombage inférieure (38) déplacée horizontalement dans le sens de transport des feuilles de verre et une forme de bombage supérieure (1) disposée au-dessus du plan de transport des feuilles de verre, fixée à des barres (5) verticales permettant sa montée et sa descente, et dont la force de pressage est déterminée par son propre poids, **caractérisé en ce que** ladite forme de bombage supérieure (1) est fixée auxdites barres (5) de façon réglable en hauteur et angulairement, rendant ainsi la force de pressage indépendante de la position en hauteur de la forme de bombage inférieure (38).

2. Dispositif selon la revendication 1, **caractérisé en ce** **que** la forme supérieure de bombage (1) comprend une platine horizontale (9) à laquelle sont fixées des barres (5) par des appuis flexibles.

3. Dispositif selon la revendication 2, **caractérisé en ce que** lesdits appuis flexibles sont constitués par des segments sphériques (13), fixés aux extrémités de chacune des barres (5), concourant avec des perçages (11) ayant une partie élargie (12).

4. Dispositif selon l'une des revendications précédentes, **caractérisé en ce que** lesdites barres (5) passent au travers du toit (4) de la chambre de bombage par des perçages (7) dont le diamètre est plus grand que celui des barres (5) pour permettre un déplacement latéral ou une inclinaison des barres (5), le passage annulaire se formant entre une barre (5) et un perçage (7) étant fermé de façon étanche par une rondelle (19) pouvant se déplacer latéralement.

5. Dispositif selon l'une des revendications 1 à 4, **caractérisé en ce que** les barres (5) sont suspendues par des câbles ou chaînes (22) à un cadre (23) pouvant être abaissé ou remonté et sur lequel sont disposés des appareillages (32, 33), lesdits appareillages exerçant sur les barres (5) par l'intermédiaire d'un câble tracteur (30) une force s'opposant à celle du poids de la forme de bombage (1).

6. Dispositif selon la revendication 5, **caractérisé en ce** **que** lesdits appareillages sont munis de moyens permettant le réglage de l'intensité de la force exercée.

7. Dispositif selon la revendication 5 ou 6, **caractérisé** **en ce que** lesdits appareillages sont des vérins (33) hydrauliques ou pneumatiques.

8. Dispositif selon la revendication 7, **caractérisé en ce** **que** la pression du fluide amenée au vérin (33) est réglée à l'aide d'un régulateur de pression (35) et est conservée indépendamment de la position du piston dans le vérin (33).

9. Dispositif selon l'une ou plusieurs des revendications 1 à 8, **caractérisé en ce que** la forme supérieure de bombage (1) et la forme de bombage inférieure (38) correspondante sont pourvues de moyens de centrage mutuels.

10. Dispositif selon la revendication 9, **caractérisé en** **ce que** lesdits moyens de centrage se composent d'un boulon (42) concourant avec un oeil (44) et d'un boulon (43) concourant avec un trou oblong (45) orienté vers l'oeil (44).

## Patentansprüche

1. Vorrichtung zum Preßbiegen von Glasscheiben in horizontaler Lage mit wenigstens einer in Transportrichtung der Glasscheiben horizontal verfahrbaren unteren Biegeform (38) und einer oberhalb der Transportebene der Glasscheiben angeordneten oberen Biegeform (1), die an vertikalen Stangen (5) zum Anheben und Absenken der Biegeform befestigt ist und deren Preßkraft durch ihr Eigengewicht bestimmt wird, **dadurch gekennzeichnet**, daß die obere Biegeform (1) an den Stangen (5) in der Höhe und in der Winkellage veränderbar gelagert und so die Preßkraft unabhängig von der Höhenlage der unteren Biegeform (38) ist.

2. Vorrichtung nach Anspruch 1, dadurch gekennzeichnet, daß die obere Biegeform (1) eine horizontale Platte (9) umfaßt, an der die Stangen (5) über nachgiebige Lager befestigt sind.

3. Vorrichtung nach Anspruch 2, dadurch gekennzeichnet, daß die nachgiebigen Lager aus Kugelsegmenten (13) bestehen, die jeweils an den Enden der Stangen (5) angeordnet sind und mit eine erweiterte Ausnehmung (12) aufweisenden Bohrungen (11) zusammenwirken.

4. Vorrichtung nach einem der voraufgehenden Ansprüche, dadurch gekennzeichnet, daß die Stangen (5) durch die obere Abschlußwand (4) der Biegekammer durch Durchbrechungen (7) herausgeführt sind, deren Durchmesser größer ist als der Durchmesser der Stangen (5) und die so eine seitliche Verschiebung oder eine Neigung der Stangen (5) erlauben, wobei der Ringspalt zwischen einer Stange (5) und einer Durchbrechung (7) durch eine seitlich verschiebbare Ringplatte (19) dicht verschlossen wird.

5. Vorrichtung nach einem der Ansprüche 1 bis 4, dadurch gekennzeichnet, daß die Stangen (5) über Seile oder Ketten (22) an einem absenkbaren und anhebbaren Rahmen (23) hängen, auf dem Einrichtungen (32,33) angeordnet sind, die über ein Zugseil (30) auf die Stangen (5) eine dem Eigengewicht der Biegeform (1) entgegengerichtete Kraft ausüben.

6. Vorrichtung nach Anspruch 5, dadurch gekennzeichnet, daß die Einrichtungen mit Mitteln zum Einstellen der Größe der ausgeübten Kraft versehen sind.

7. Vorrichtung nach Anspruch 5 oder 6, dadurch gekennzeichnet, daß die Einrichtungen hydraulische oder pneumatische Zylinder (33) sind.

8. Vorrichtung nach Anspruch 7, dadurch gekennzeichnet, daß der Druck des dem Zylinder (33) zugeführten Druckmediums durch einen Druckregler (35) geregelt und unabhängig von der Position des Kolbens in dem Zylinder (33) aufrechterhalten wird.

9. Vorrichtung nach einem oder mehreren der Ansprüche 1 bis 8, dadurch gekennzeichnet, daß die obere Biegeform (1) und die entsprechende untere Biegeform (38) mit Mitteln zur gegenseitigen Zentrierung versehen sind.

10. Vorrichtung nach Anspruch 9, dadurch gekennzeichnet, daß die Mittel zur Zentrierung aus einem mit einem Zentrierauge (44) zusammenwirkenden Zentrierbolzen (42) und einem mit einem in Richtung auf das Zentrierauge (44) ausgerichteten Langloch (45) zusammenwirkenden Zentrierbolzen (43) bestehen.

## Claims

1. Device for bending by pressing of glass sheets in a horizontal position, comprising at least one lower bending mould (38), displaced horizontally in the direction of conveying of the glass sheets, and an upper bending mould (1) disposed above the conveying plane of the glass sheets and fixed to vertical bars (5) enabling it to rise and descend, and the pressing force of which is determined by its own weight, characterized in that said upper bending mould (1) is fixed to said bars (5) adjustably in height and in angle, thus making the pressing force independent of the position in height of the lower bending mould (38).

2. Device according to Claim 1, characterized in that the upper bending mould (1) comprises a horizontal plate (9), to which the bars (5) are fixed by flexible supports.

3. Device according to Claim 2, characterized in that said flexible supports are constituted of spherical segments (13), fixed to the ends of each of the bars (5), and cooperating with bores (11) having a widened-out portion (12).

4. Device according to one of the preceding Claims, characterized in that said bars (5) pass through the roof (4) of the bending chamber by bores (7), the diameter of which is larger than that of the bars (5) to allow a lateral displacement or an inclination of the bars (5), the annular passage formed between a bar (5) and a bore (7) being closed in sealed manner by a washer (19) capable of lateral displacement.

5. Device according to one of Claims 1 to 4, characterized in that the bars (5) are suspended by cables or chains (22) from a frame (23) capable of being lowered and raised and upon which are disposed equipment items (32, 33), said equipment items applying to the bars (5), by means of a pulling cable (30), a force opposing that of the weight of the bending mould (1).

6. Device according to Claim 5, characterized in that said equipment items are provided with means enabling the intensity of the force applied to be regulated.

7. Device according to Claim 5 or 6, characterized in that said equipment items are hydraulic or pneumatic jacks (33).

8. Device according to Claim 7, characterized in that the pressure of the fluid supplied to the jack (33) is regulated by means of a pressure regulator (35) and is maintained independently of the position of the piston in the jack (33).

9. Device according to one or more of Claims 1 to 8, characterized in that the upper bending mould (1) and the corresponding lower bending mould (38) are provided with mutual centering means.

10. Device according to Claim 9, characterized in that said centering means are composed of a pin (42) cooperating with an eye (44) and of a pin (43) cooperating with an oblong hole (45) orientated towards the eye (44).
